# EUROPEAN PATENT SPECIFICATION

(11) **EP 2 434 910 B1**
(45) Date of publication and mention of the grant of the patent: **21.10.2015**
(21) Application number: 10781092.1
(22) Date of filing: 25.05.2010
(51) Int. Cl.: A23L 1/236, C11B 5/00

(54) **SHELF STABLE MONATIN SWEETENED BEVERAGE**
LAGERSTABILES MIT MONATIN GESÜSSTES GETRÄNK
BOISSON ÉDULCORÉE À LA MONATINE À LONGUE DURÉE DE CONSERVATION

(30) Priority: 28.05.2009 US 181871 P
(43) Date of publication of application: 04.04.2012
(73) Proprietor: Cargill, Incorporated, Wayzata, MN 55391 (US)
(72) Inventor: EVANS, Jeffrey, C., St. Michael MN 55376 (US); GOULSON, Melanie, Jean, Dayton MN 55327 (US)
(74) Representative: Elseviers, Myriam
(86) International application number: PCT/US2010/036078
(87) International publication number: WO 2010/138513

(56) References cited:
- WO-A1-2010/036576
- US-A- 4 347 695
- US-A- 5 952 066
- US-A1- 2005 106 305
- US-A1- 2006 051 472
- US-A1- 2006 257 550
- US-A1- 2006 257 550
- US-A1- 2010 075 005
- US-B1- 6 231 907
- US-B1- 6 375 048
- LEDA COLTRO ET AL: "Evaluation of a UV absorber added to PET bottles for edible oil packaging", PACKAGING TECHNOLOGY AND SCIENCE, vol. 16, no. 1, 1 January 2003 (2003-01-01), pages 15-20, XP55040495, ISSN: 0894-3214, DOI: 10.1002/pts.607
- MOLLER ET AL: "Photooxidation of nitrosylmyoglobin at low oxygen pressure. Quantum yields and reaction stoechiometries", MEAT SCIENCE, ELSEVIER SCIENCE, GB, vol. 60, no. 4, 1 April 2002 (2002-04-01), pages 421-425, XP005112916, ISSN: 0309-1740, DOI: 10.1016/S0309-1740(01)00155-3
- JENS PETTER WOLD ET AL: "Effect of Oxygen Concentration on Photo-oxidation and Photosensitizer Bleaching in Butter", PHOTOCHEMISTRY AND PHOTOBIOLOGY, vol. 85, no. 3, 18 December 2008 (2008-12-18), pages 669-676, XP55040668, ISSN: 0031-8655, DOI: 10.1111/j.1751-1097.2008.00492.x
- MANI UPRETI ET AL: "Photostability study of natural high-potency sweetener monatin in a model beverage system and characterisation of the degradation products", FOOD CHEMISTRY, ELSEVIER LTD, NL, vol. 131, no. 2, 24 August 2011 (2011-08-24), pages 413-421, XP028324838, ISSN: 0308-8146, DOI: 10.1016/J.FOODCHEM.2011.08.073 [retrieved on 2011-09-05]

## Description

### CROSS REFERENCE TO RELATED APPLICATION

### FIELD

The present disclosure relates to shelf stable and particularly to chemically stable beverages that are sweetened with monatin.

### BACKGROUND

Monatin (2-hydroxy-2-(indol-3-ylmethyl)-4-aminoglutaric acid) is a naturally occurring, high intensity or high potency sweetener that was originally isolated from the plant *Sclerochiton ilicifolius,* found in the Transvaal Region of South Africa. Monatin has the chemical structure:

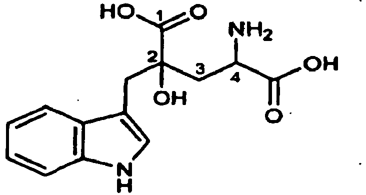

Because of various naming conventions, monatin is also known by a number of alternative chemical names, including: 2-hydroxy-2-(indol-3-ylmethyl)-4-aminoglutaric acid; 4-amino-2-hydroxy-2-(1H-indol-3-ylmethyl)-pentanedioic acid; 4-hydroxy-4-(3-indolylmethyl)glutamic acid; and, 3-(1-amino-1,3-dicarboxy-3-hydroxy-but-4-yl)indole.

Monatin has two chiral centers thus leading to four potential stereoisomeric configurations; the R,R configuration (the "R,R stereoisomer" or "R,R monatin"); the S,S configuration (the "S,S stereoisomer" or "S,S monatin"); the R,S configuration (the "R,S stereoisomer" or "R,S monatin"); and the S,R configuration (the "S,R stereoisomer" or "S,R monatin").

Monatin has an excellent sweetness quality, and depending on a particular composition, monatin may be several hundred times sweeter than sucrose, and in some cases thousands of times sweeter than sucrose. Monatin has four stereoisomeric configurations which exhibit differing levels of sweetness. The S,S stereoisomer of monatin is about 50-200 times sweeter than sucrose by weight. The R,R stereoisomer of monatin is about 2000-2400 times sweeter than sucrose by weight. Depending on the methods of manufacture, purification and intended uses a monatin composition may be a pure stereoisomer or it may be a mixture of stereoisomers.

Monatin can be isolated from the bark of the roots of the plant *Sclerochiton ilicifolius.* For example, the bark can be ground and extracted with water, filtered and freeze dried to obtain a dark brown, amorphous mass. The mass can be re-dissolved in water and reacted with a cation resin in the acid form, e.g., "Biorad" AG50W .times.8 in the HCl form (Bio-Rad Laboratories, Richmond, Calif.). The resin can be washed with water and the compounds bound to the resin eluted using an aqueous ammonia solution. The eluate can be freeze dried and subjected to aqueous gel filtration. See, for example, U.S. Pat. No. 5,128,164. Alternatively, monatin can be chemically synthesized. See, for example, the methods of Holzapfel and Olivier, Synth. Commun. 23:2511 (1993); Holzapfel et al., Synth. Commun. 38:7025 (1994); U.S. Pat. No. 5,128,164; U.S. Pat. No. 4,975,298; and U.S. Pat. No. 5,994,559.

Monatin can also be produced via enzymatic processes. Reference is made to WO 2003/091396 A2, which discloses, inter alia, polypeptides, pathways, and microorganisms for in vivo and in vitro production of monatin. WO 2003/091396 A2 (see, e.g., Figures 1-3 and 11-13) and U.S. Patent Publication No. 2005/282260 describe the production of monatin from tryptophan through multi-step pathways involving biological conversions with polypeptides (proteins) or enzymes. One pathway described involves converting tryptophan to indole-3-pyruvate ("I-3-P") (reaction (1)), converting indole-3-pyruvate to 2-hydroxy 2-(indol-3-ylmethyl)-4-keto glutaric acid (monatin precursor, "MP") (reaction (2)), and converting MP to monatin (reaction (3)), biologically, for example, with enzymes. This process may be used to make stereoisomer enriched monatin compositions including a monatin composition that comprises greater than 90% R,R monatin.

The use of high intensity sweeteners allow for the formulation of sweetened beverages with zero or significantly fewer calories, an important health and wellness feature as many countries are attempting to address weight related public health concerns. In particular a naturally occurring high intensity sweetener with a pleasing, sugar-like taste profile, such as monatin is desirable. However, at times various high intensity sweeteners, including monatin, may present formulation challenges due to varying chemical stability under common beverage conditions, such as low pH, exposure to light, presence of carbonation (CO₂), presence of oxygen (O₂), interaction with various flavor components, packaging that is transparent to ultraviolet (UV) light or visible light or packaging that is to some extent O₂ permeable. These stability challenges can manifest themselves in a perceived loss of sweetness, discoloration or undesirable flavors or aromas.
US2006/0257550 discloses to store monatin or a salt thereof in the presence of a radical scavenger and/or in a UV light-shielding to prevent the decomposition of monatin or a salt thereof under certain conditions by exposure to ultraviolet light, particularly under acidic conditions.
WO2010/036576 (relevant under Art 54(3) EPC only) discloses the prevention of the degradation of monatin in a beverage under certain conditions by adding a C₆-C₃phenyl propenoic carbonyl compound. The stabilization of carbonated monatin sweetened softdrinks with eg. EMIQ is tested.
The present invention addresses one or more of these commercially relevant concerns.

### SUMMARY

One embodiment of the present invention is a shelf stable beverage composition which comprises a liquid having a reduced dissolved O₂ content of less than 1.5 mg/l, a high intensity sweetener comprising monatin, and an edible antioxidant. In further embodiments the high intensity sweetener of this shelf stable beverage composition comprises stereoisomerically-enriched R,R monatin. In some embodiments the liquid of the beverage composition is water. In particular embodiments the liquid has a dissolved O₂ content of less than 0.5 mg/L. In other embodiments the liquid has a dissolved O₂ content between 0.05 mg/L and 0.5 mg/L. Further embodiments provide that the liquid is substantially free of dissolved O₂.

In some embodiments the shelf stable beverage composition's edible antioxidant is a natural edible antioxidant. And in some embodiments the natural edible antioxidant is enzymatically modified isoquercitrin (EMIQ). In other embodiments the concentration of EMIQ is between 15 mg/L and 45 mg/L. And in some cases the concentration of EMIQ is 30 mg/L. In additional embodiments the natural edible antioxidant is at least of one of the compositions selected from the group consisting of erythorbic acid, ubiquinone, glutathione, rosemary extract, grape seed extract, blueberry extract, pine bark extract, cranberry extract, olive juice, cocoa polyphenols, wine polyphenols, myricitrin, rutin, EMIQ, tocopherols, tocotrienols, carotenoids, β-carotene, lycopene, lutein, and natural ascorbic acid.

In certain embodiments of the shelf stable beverage composition the monatin comprises at least 90% R,R,-monatin, or in other embodiments the monatin comprises at least 95% R,R-monatin.

In some embodiments the shelf stable beverage composition presents no discernable musty off-flavor after 28 days stored at 28° C in the continuous presence of fluorescent lighting of 2200 lux. In other embodiments the composition contains less than 0.5 ppm of 3-methyl indole after 28 days stored at 28° C in the continuous presence of fluorescent lighting of 2200 lux. Some embodiments of the shelf stable beverage composition will retain at least 60% of its monatin, as measured by total indole amount, after 28 days stored at 28° C in the continuous presence of fluorescent lighting of 2200 lux. In additional embodiments, the shelf stable beverage composition will retain at least 75% of its monatin, as measured by total indole amount, after 28 days stored at 28° C in the continuous presence of fluorescent lighting of 2200 lux. Further embodiments provide a shelf stable beverage composition will retain at least about 85% of its monatin, as measured by total indole amount, after 28 days stored at 28° C in the continuous presence of fluorescent lighting of 2200 lux.

In some embodiments the shelf stable beverage will have a pH between 2.0 and 7.0. In other embodiments the pH is between 2.5 and 4.5. In further embodiments the pH is between 2.8 and 3.0.

An embodiment of a shelf stable packaged beverage includes a container having a wall, at least a portion of which transmits visible or UV light, a beverage composition in the container, the beverage composition comprising water, monatin and an antioxidant, and where such beverage composition has a dissolved O₂ content less than 1.5 mg/L.

In other embodiments the shelf stable packaged beverage will have a container wall that carries at least one composition selected from the group consisting of an O₂ trapping composition, an O₂ diffusion blocking composition, a visible light blocking composition, and a UV light blocking composition.

Some embodiments of the shelf stable packaged beverage will include a shelf stable beverage composition according the preceding descriptions.

In an additional embodiment the beverage is a still beverage.

In a further embodiment the beverage is a carbonated beverage.

### DETAILED DESCRIPTION

As stated above, monatin has two chiral centers leading to four potential stereoisomeric configurations. As used herein, unless otherwise indicated, the term "monatin" is used to refer to compositions including any combination of the four stereoisomers of monatin (or any of the salts thereof), including a single isomeric form.

Unless otherwise stated, the term "monatin" includes any salt thereof. As used herein, unless otherwise stated, the term "monatin" is independent of the method by which the monatin was made, and thus encompasses monatin that was, for example, synthesized in whole or in part by biosynthetic pathway(s), purely synthetic means, or isolated from a natural source.

In the process of formulating monatin into various beverage compositions it has been observed that monatin alone is insufficiently stable in extended trials when found in the combined presence of O₂ and light (either visible and/or UV). What constitutes appropriate levels of stability varies by specific beverage application and market requirements. A general rule of thumb is that 13 weeks of storage stability (or "shelf stability") under typical store handling conditions is required for common cold-filled consumer beverage applications. And another general rule of thumb is that 26 to 52 weeks of storage stability (or "shelf stability") under typical handling conditions is required for common hot-filled consumer beverage applications. In general, storage stability is not a readily quantifiable quality, but rather an organoleptic taste perception issue. In a broad sense storage stability is subjective.

However, in the case of specific compositions, such as monatin, key features of instability can be indentified and used to predict acceptable levels of shelf stability. In the case of monatin, the levels of total indole-containing molecules (as an indole ring is a substantial portion of the monatin molecule) is a good indicator of the relative shelf stability of various formulations. It has also been found that monitoring "musty" off flavors or aromas by trained human sensory evaluators also is predictive of monatin's shelf stability. Further, it is believed that one degradation product from monatin that contributes to this "musty" organoleptic property is 3-methyl indole. Limiting the presence of this composition in the beverage in some instances can be used to ensure appropriate shelf stability. In particular, limitation of the presence of 3-methyl indole to less than 0.5 ppm (as determined by the methodology disclosed herein) is desirable in some embodiments of the invention.

In clear or lightly colored beverages, one may also quantitatively observe yellow discoloration. The prevention of discoloration is then predictive of appropriate shelf stability.

It has been discovered that monatin is subject to degradation in the combined presence of dissolved O₂ and light, resulting in one or more of a loss of sweetness, yellow discoloration and development of off-flavors or aromas. This light may be in either the visible or UV spectrum, however it appears that the UV spectrum has a greater degradative effect.

As exemplified below, in some circumstances solely adding an antioxidant composition or solely reducing the dissolved O₂ concentration are insufficient to provide appropriate duration of stability. As such, embodiments of the present invention combine at least two stability enhancing features selected from the group of an edible antioxidant composition, low initial dissolved O₂ concentration liquids, an O₂ impenetrable container wall, a visible and UV light impenetrable container wall, and container walls which carry one or more of an O₂ trapping composition, an oxygen diffusion blocking composition, a visible light blocking composition, or a UV light blocking composition.

In some embodiments, beverage compositions of this invention will include edible antioxidants. These edible antioxidants are used within their typical usage levels in comparable beverage applications and selection of such usage levels is well within the capability of those skilled in the art. Examples of such antioxidants include vitamin C (e.g., ascorbic acid, magnesium ascorbyl phosphate), butylated hydroxyanisole (BHA), butylated hydroxytoluene (BHT), tertiary butylhydroquinone (TBHQ), propyl gallate (PG), and ascorbyl palmitate.

As monatin is a naturally occurring high intensity sweetener in some embodiments it may be preferable to use a natural edible antioxidant, examples of which include natural ascorbic acid, myricitrin, rutin, enzymatically modified isoquercitrin (EMIQ), erythorbic acid, carotenoids, lutein, lycopene, β-carotene, tocopherols (e.g., α-tocopherol (natural vitamin E), β-tocopherol, γ-tocopherol, δ-tocopherol), tocotrienols, cocoa polyphenols, wine polyphenols, and a variety of water soluble plant extracts such as rosemary extract from NATUREX (South Hackensack, NJ), grape seed extract from Polyphenolics (Madera, CA), blueberry powder from Niagara Foods (Middleport, NY), pine bark extract from Natural Health Science (Hoboken, NJ), cranberry powder from Ocean Spray (Middleboro, MA), and olive juice extract from DSM Nutritional Products (Parsippany, NY).

In some embodiments it is preferable to select the natural edible antioxidant EMIQ. The concentration of EMIQ is typically between about 15 mg/L and about 45 mg/L and in some cases the concentration of EMIQ is about 30 mg/L.

Water is a basic ingredient in the beverages disclosed herein, typically being the primary liquid portion in which the remaining ingredients are dissolved, emulsified, mixed, suspended or dispersed. Purified water can be used in the manufacture of certain embodiments of the beverages disclosed here, and water of a standard beverage quality can be employed in order to not adversely affect beverage taste, odor, or appearance. The water typically will be clear, colorless, free from objectionable minerals, tastes and odors, free from organic matter, low in alkalinity and of acceptable microbiological quality based on industry and government standards applicable at the time of producing the beverage. In certain typical embodiments, water is present at a level of from about 80% to about 99.9% by weight of the beverage.

As typically the largest volume ingredient, water becomes a significant contributor to the final dissolved O₂ concentration of the beverage. As such, in some embodiments of the present invention reducing the dissolved O₂ concentration of the water is a contributor to improved monatin stability. In other embodiments the dissolved O₂ concentration of the whole beverage composition is reduced.

Under typical manufacturing conditions the dissolved O₂ concentrations of both the water ingredient and the final beverage composition are in the range of about 5.0 mg/L to about 10.0 mg/L. However, in the present invention the dissolved O₂ concentrations is less than 1.5 mg/L. In some embodiments the dissolved oxygen concentration of at least one of the water ingredient or the finished beverage composition is reduced to less than 0.5 mg/L.

Commercially, these reduced O₂ conditions can be achieved by sparging beverages with inert gases including without limitation nitrogen (N₂), carbon dioxide (CO₂), or argon (Ar). Alternatively, application of reduced pressures (vacuum) will also facilitate O₂ removal. The efficiency of O₂ stripping can be achieved in some embodiments of the invention by using specialized deaeration equipment, for example liquid shear equipment manufactured by GasTran Systems that reduces the dissolved O₂ concentration by shearing the solution into very small droplets in the presence of the selected inert gas and/or vacuum.

After manufacture, some embodiments of the beverage composition are packaged in a container. These containers comprise a wall which is further comprised of a liquid impermeable composition. The container additionally comprises a mechanism for sealing the container, such as a cap or closure. Container walls may be made from glass, steel, aluminum, other food contact safe metals, polymers or a combination thereof. Polymers are a common material for wall composition. The most commonly used polymers used in container walls and closures include, low density polyethylene (LDPE), high density polyethylene (HDPE), polyethylene naphthalate (PEN), ethylene vinyl alcohol (EVA), polypropylene (PP), ethylene propylene copolymers (EPC), polyvinyl chloride (PVC), acrylonitrile copolymers (AN), polyethylene terephthalate (PET), polystyrene (PS), polycarbonate (PC), and nylon (NYL). Additional container wall compositions would be apparent to one skilled in the art.

The polymers used in container wall and closure manufacture exhibit to varying degrees O₂ permeability. The post-manufacture migration of O₂ into the beverages of certain embodiments of the present invention can significantly reduce the stability of monatin, even in some embodiments that comprise an anti-oxidant. In order to reduce or substantially eliminate the migration of O₂ into the packaged beverage composition of some embodiments - of the present invention it is desirable to further provide one or more of an O₂ trapping composition, an O₂ diffusion blocking composition, a visible light blocking composition, or a UV light blocking composition carried by the container wall and closure. This may be accomplished by one or more of incorporation into the container wall or closure, or coating or otherwise treating the container wall or closure with compositions selected to reduce the effective O₂ permeability of the container wall or closure. In some embodiments these compositions will be incorporated into the container wall or closure polymer in an amount of about 1% to about 5%.

Compositions capable of reducing the O₂ permeability of a container wall or closure (either by O₂ trapping, by hindering diffusion, or both) include ascorbic acid, glucose oxidase, light oxidizable unsaturated hydrocarbons, metal oxidizable unsaturated hydrocarbons, and oxidizable metals such as iron, zinc, copper, aluminum, or tin. Additional oxygen permeability reducing compositions would be readily apparent to one skilled in the art.

Compositions capable of reducing or substantially blocking the passage of light (visible or UV) through an otherwise light transmitting container wall include Ultimate UV™ Blocker (ColorMatrix), ClearShield^{®} UV Absorber (Milliken Chemical) and Vitiva™ UV Absorber (Eastman Chemical). Additional light blocking compositions would be apparent to one skilled in the art. In alternative embodiments one may use a light opaque material such a colored glass, or metal such as steel, tin or aluminum.

As used herein, "beverage composition" refers to a composition that is drinkable as is (i.e., does not need to be diluted, or is "ready-to-drink") or a liquid concentrate that can be diluted or mixed with additional liquid to form a drinkable beverage. Beverage compositions herein include carbonated and non-carbonated soft drinks, coffee beverages, tea beverages, dairy beverages, liquid concentrates, flavored waters, enhanced waters, fruit juice and fruit juice-flavored drinks, sport drinks, and alcohol products.

In some embodiments, beverage compositions include a blend of monatin and another sweetener (e.g., sucrose, sucralose, or high fructose corn syrup). In other embodiments, beverage compositions comprising monatin include a flavoring, coloring, organic acids, inorganic acids, preservatives, caffeine, polyols and/or a bulk sweetener. Bulk sweeteners may be, for example, sugar sweeteners, sugarless sweeteners and lower glycemic carbohydrates (i.e., carbohydrates with a lower glycemic index than glucose). In other embodiments, monatin-containing beverage compositions include a high-intensity sweetener and/or a lower glycemic carbohydrate. In other embodiments, monatin-containing beverage compositions include sweetness and/or flavor enhancers.

In some embodiments, the beverage compositions comprise monatin that consists essentially of S,S or R,R monatin. In other embodiments, the compositions contain predominantly S,S or R,R monatin. "Predominantly" means that of the monatin stereoisomers present in the composition, the monatin contains greater than 90% of a particular stereoisomer. In some embodiments, the compositions are substantially free of S,S or R,R monatin. "Substantially free" means that of the monatin stereoisomers present in the composition, the composition contains less than 2% of a particular stereoisomer. In another aspect of the present invention, a beverage composition includes a stereoisomerically-enriched monatin mixture. "Stereoisomerically-enriched monatin mixture" means that the mixture contains more than one monatin stereoisomer and at least 60% of the monatin stereoisomers in the mixture is a particular stereoisomer, such as R,R, S,S, S,R or R,S. In other embodiments, the mixture contains greater than 65%, 70%, 75%, 80%, 85%, 90%, 95%, 98% or 99% of a particular monatin stereoisomer. In another embodiment, a beverage composition comprises an stereoisomerically-enriched R,R or S,S monatin. "Stereoisomerically-enriched" R,R monatin means that the monatin comprises at least 60% R;R monatin. "Stereoisomerically-enriched" S,S monatin means that the monatin comprises at least 60% S,S monatin. In other embodiments, "stereoisomerically-enriched" monatin comprises greater than 65%, 70%, 75%, 80%, 85%, 90%, 95%, 98% or 99% of R,R or S,S monatin.

In other embodiments, a beverage composition comprising monatin or salt thereof further comprises one or more of a bulk sweetener, a high-intensity sweetener, a lower glycemic carbohydrate, a flavoring, an antioxidant, caffeine or a sweetness enhancer. For example, the flavoring may be chosen from a cola flavor, a citrus flavor, a root beer flavor and a combination thereof. For example, the bulk sweetener may be chosen from corn sweeteners, sucrose, dextrose, invert sugar, maltose, dextrin, maltodextrin, fructose, levulose, high fructose corn syrup, corn syrup solids, galactose, trehalose, isomaltulose, fructooligosaccharides and a combination thereof. For example, the high-intensity sweetener may be chosen from sucralose, aspartame, saccharin, acesulfame K, alitame, thaumatin, dihydrochalcones, neotame, cyclamates, stevioside, mogroside, glycyrrhizin, phyllodulcin, monellin, mabinlin, brazzein, circulin, pentadin and a combination thereof. For example, the lower glycemic carbohydrate may be chosen from D-tagatose, sorbitol, mannitol, xylitol, lactitol, erythritol, maltitol, hydrogenated starch hydrolysates, isomalt, D-psicose, 1,5 anhydro D-fructose and a combination thereof. For example, the sweetness enhancer may be chosen from curculin, miraculin, cynarin, chlorogenic acid, caffeic acid, strogins, arabinogalactan, maltol, dihyroxybenzoic acids and a combination thereof.

For example, monatin may be blended with other nutritive and nonnutritive sweeteners to achieve particular flavor profiles or calorie targets. Thus, sweetener compositions can include combinations of monatin with one or more of the following sweetener types: (1) sugar alcohols (such as erythritol, sorbitol, maltitol, mannitol, lactitol, xylitol, isomalt, low glycemic syrups, etc.); (2) other high intensity sweeteners (such as aspartame, sucralose, saccharin, acesulfame-K, stevioside, cyclamate, neotame, thaumatin, alitame, dihydrochalcone, monellin, glycyrrihizin, mogroside, phyllodulcin, mabinlin, brazzein, circulin, pentadin, etc.) and (3) nutritive sweeteners (such as sucrose, D-tagatose, invert sugar, fructose, corn syrup, high fructose corn syrup, glucose/dextrose, trehalose, isomaltulose, etc.). Monatin may be used in such blends as a taste modifier to suppress aftertaste, enhance other flavors, or improve the temporal flavor profile.

In certain embodiments, monatin is present in an amount that ranges from 0.0003 to 1% of the beverage composition (i.e., 3 to 10,000 ppm) (e.g., 0.0005 to 0.2%), including any particular value within that range (e.g., 0.0003%, 0.005%, 0.06% or 0.2% of the beverage composition). For example, a beverage composition may comprise 0.0005 to 0.005% (e.g., 0.001 to 0.0045%) of the R,R monatin, or 0.005 to 0.2% (e.g., 0.01 to 0.175%) of S,S monatin.

Food grade natural or artificial colorants may optionally be included in the beverage compositions. These colorants may be selected from those generally known and available in the art, including synthetic colors (e.g., azo dyes, triphenylmethanes, xanthenes, quinines, and indigoids), caramel color, titanium dioxide, red #3, red #40, blue #1, and yellow #5. Natural coloring agents such as beet juice (beet red), carmine, curcumin, lutein, carrot juice, berry juices, spice extractives (turmeric, annatto and/or paprika), and carotenoids, for example, may also be used. The type and amount of colorant selected will depend on the end product and consumer preference.

In some embodiments, beverage compositions also include one or more natural or synthetic flavorings. Suitable flavorings include citrus and non-citrus fruit flavors; spices; herbs; botanicals; chocolate, cocoa, or chocolate liquor; coffee; flavorings obtained from vanilla beans; nut extracts; liqueurs and liqueur extracts; fruit brandy distillates; aromatic chemicals, imitation flavors; and concentrates, extracts, or essences of any of the same. Citrus flavors include, for example, lemon, lime, orange, tangerine, grapefruit, citron or kumquat. Many flavorings are available commercially from, e.g., Rhodia USA (Cranbury, N.J.); IFF (South Brunswick, N.J.); Wild Flavors, Inc. (Erlanger, Ky.); Silesia Flavors, Inc. (Hoffman Estates, Ill.), Chr. Hansen (Milkwaukee, Wis.), and Firmenisch (Princeton, N.J.).

The pH of a beverage composition can be controlled by the addition of acids (e.g., inorganic or organic acids). Typically, the pH of the beverage composition ranges from 2.5 to 7.0, and in some embodiments it ranges from 2.5 to 4.5 and in additional embodiments it ranges from 2.8 to 3.0. A useful inorganic acid includes phosphoric acid, which can be present in its undissociated form, or as an alkali metal salt (e.g., potassium or sodium hydrogen phosphate, or potassium or sodium dihydrogen phosphate salts). Non-limiting examples of organic acids that can be used include citric acid, malic acid, lactic acid, fumaric acid, adipic acid, gluconic acid, glucuronolactone, hydroxycitric acid, tartaric acid, ascorbic acid, acetic acid or mixtures thereof. These acids can be present in their undissociated form or as their respective salts. The amount included will depend, of course, on the type of buffering agents and on the degree to which the pH is to be adjusted.

It should be understood that beverages and other beverage products in accordance with this disclosure may have any of numerous different specific formulations or constitutions. The formulation of a beverage product in accordance with this disclosure can vary to a certain extent, depending upon such factors as the product's intended market segment, its desired nutritional characteristics, flavor profile and the like. For example, it will generally be an option to add further ingredients to the formulation of a particular beverage embodiment, including any of the beverage formulations described below. Additional (i.e., more and/or other) sweeteners may be added, flavorings, electrolytes, vitamins, fruit juices or other fruit products, tastents, masking agents and the like, flavor enhancers, and/or carbonation typically can be added to any such formulations to vary the taste, mouthfeel, nutritional characteristics, etc. In general, a beverage in accordance with this disclosure typically comprises at least water, sweetener, acidulant and flavoring. Exemplary flavorings which may be suitable for at least certain formulations in accordance with this disclosure include cola flavoring, citrus flavoring, root beer flavoring, spice flavorings and others. Carbonation in the form of carbon dioxide may be added for effervescence. Natural preservatives can be added if desired, depending upon the other ingredients, production technique, desired shelf life, etc. Optionally, natural caffeine can be added. Certain exemplary embodiments of the beverages disclosed here are cola-flavored carbonated beverages, characteristically containing carbonated water, sweetener, kola nut extract and/or other cola flavoring, caramel coloring, and optionally other ingredients. Additional and alternative suitable ingredients will be recognized by those skilled in the art given the benefit of this disclosure.

Some embodiments of the invention may be considered still beverages, i.e., beverages which are not carbonated. Common examples include coffee beverages, tea beverages, dairy beverages, flavored waters, enhanced waters, non-carbonated soft drinks, fruit juice and fruit juice-flavored drinks, sport drinks, and alcohol products other than beer and champagnes.

In other embodiments the beverage contains dissolved carbon dioxide (CO₂) in amounts sufficient to provide effervescence. Common examples include carbonated soft drinks, beer and champagnes. Such carbonated beverages typically have carbon dioxide concentrations of about 1.6 volumes CO2 per volume of beverage to about 4.2 volumes CO2 per volume of beverage. Carbon dioxide is typically introduced into a beverage by either fermentation (as in the case of beer and champagnes) or dissolving the carbon dioxide into the beverage under pressure (as in the case of carbonated beverages). Specific methods of beverage carbonation are well known to those skilled in the art.

In carbonated beverages, the process of carbonation results in a removal or displacement of dissolved oxygen from the beverage. In typical carbonated soft drinks carbonation of the beverage results in dissolved oxygen concentrations that are reduced to the range of about 2.0 mg/L to about 3.0 mg/L. To foster stability the dissolved oxygen levels are less than 1.5 mg/L. In some embodiments the dissolved oxygen concentration of the finished carbonated beverage composition is reduced to less than 0.5 mg/L.

The reduction in dissolved oxygen concentrations in carbonated beverage can be achieved by either increasing the amount of carbon dioxide dissolved into the beverage, or in the alternative one may de-aerate the beverage (or the water ingredient) according to the teachings provided in this specification prior to carbonation. In the case of pre-carbonation de-aeration, the dissolved oxygen concentrations of the pre-carbonated beverage in some embodiments will be less than about 6.0 mg/L, in further embodiments it will be less than about 4.0 mg/L, in additional embodiments it will be less than about 2.0 mg/L.

### EXAMPLES

Aspects of certain embodiments in accordance with aspects of the invention are illustrated in the following examples. The materials and methods described these examples are illustrative and not intended to be limiting.

### Example 1: Oxygen Concentration and Monatin Stability

Synthetic R,R-monatin containing approximately 95.4% R,R-monatin monopotassium salt (dry basis) was obtained from CSIR (Modderfontein, South Africa). About 100 mg/L of this monatin was placed in a buffered solution at a pH of about 2.8-3.0 comprising 9 mM citric acid-trisodium citrate in high purity water and preserved with about 150 mg/L sodium benzoate. Dissolved O₂ levels were either increased by bubbling compressed air or reduced by bubbling N₂ (99.9% purity) through these samples until the target O₂ concentrations were achieved. Dissolved O₂ levels were determined at 20°C using a FOXY fluorescence quenching O₂ analyzer from Ocean Optics (Dunedin, FL). Samples were stored in clear, glass ampules (~10 mL) after O₂ adjustment and heat-sealed to create an air-tight enclosure. The samples were then exposed to light continuously (24 hours per day) in a light box (~2200 lux light intensity) configured with a rotating carousel to provide even illumination. The source of light was provided by ultra-violet (UV) light wavelength transmitting bulbs and standard fluorescent bulbs. The heat produced by the lights warmed the samples to a temperature of about 28°C. Duplicate samples of each treatment were analyzed weekly for total indole concentrations via the following method. The results can be found in Table 1.

Total indole (monatin and its intramolecular rearrangement products, monatin lactone and monatin lactam) concentrations were quantified by reversed phase HPLC at 40°C using an Agilent Zorbax Eclipse C₁₈ column with UV detection at 280 nm by PDA. The compounds were eluted by a gradient mobile phase consisting of (A) 1:1 methanol and acetonitrile (v:v) with 0.3% formic acid and 10 mM ammonium formate and (B) 0.3% formic acid in water with 10 mM ammonium formate. The integrated peak areas for the three (3) compounds were expressed in terms of monatin concentration (mg/L) based on a standard curve prepared for monatin. Thus, the extinction coefficient for monatin was applied to estimate concentrations of monatin lactone and monatin lactam since standards for these compounds were unavailable.

**Table 1. Total Indole Concentrations Over Range of Dissolved Oxygen Concentrations.**

| | **0.4 mg/L O₂** | **1.5 mg/L O₂** | **4.0 mg/L O₂** | **6.5 mg/L O₂** | **8.3 mg/L O₂** |
|---|---|---|---|---|---|
| **0 Days** | 104.0 mg/L | 104.0 mg/L | 104.0 mg/L | 104.0 mg/L | 104.0 mg/L |
| **7 Days** | 98.7 mg/L | 97.1 mg/L | 94.6 mg/L | 97.0 mg/L | 89.6 mg/L |
| **14 Days** | 102.9 mg/L | 90.6 mg/L | 71.3 mg/L | 75.7 mg/L | 49.9 mg/L |
| **21 Days** | 97.5 mg/L | 93.3 mg/L | 58.0 mg/L | 54.7 mg/L | 21.3 mg/L |
| **28 Days** | 96.2 mg/L | 76.0 mg/L | 14.6 mg/L | 0.0 mg/L | 0.0 mg/L |

### Example 2. Low Oxygen and Anti-Oxidant Effects on Monatin Stability

Synthetic R,R-monatin containing approximately 95.4% R,R-monatin monopotassium salt (dry basis) was obtained from CSIR (Modderfontein, South Africa). About 35 mg/L of this monatin was placed in a buffered solution at a pH of about 2.8-3.0 comprising 9 mM citric acid-trisodium citrate in high purity water and preserved with about 150 mg/L sodium benzoate. To some samples 200 ppm SANMELIN™ AO-3000 enzymatically modified isoquercitrin (EMIQ) (San-Ei Gen F.F.I. - Osaka, Japan) was added. Dissolved O₂ levels were either increased by bubbling compressed air or reduced by bubbling N₂ (99.9% purity) through these samples until the target O₂ concentrations were achieved. Dissolved O₂ levels were determined at 20°C using a FOXY fluorescence quenching O₂ analyzer from Ocean Optics (Dunedin, FL). Samples were stored in clear, glass ampules (∼10 mL) after O₂ adjustment and heat-sealed to create an air-tight enclosure. The samples were then either stored in the dark, or exposed to light continuously (24 hours per day) in a light box (~2200 lux light intensity) configured with a rotating carousel to provide even illumination. The source of light was provided by ultra-violet (UV) light wavelength transmitting bulbs and standard fluorescent bulbs. The heat produced by the lights warmed the samples to a temperature of about 28°C. Duplicate samples of each treatment were analyzed weekly for total indole concentrations via the following method. The results can be found in Table 2.

Total indole (monatin and its intramolecular rearrangement products, monatin lactone and monatin lactam) concentrations were quantified by reversed phase HPLC at 40°C using an Agilent Zorbax Eclipse C₁₈ column with UV detection at 280 nm by PDA. The compounds were eluted by a gradient mobile phase consisting of (A) 1:1 methanol and acetonitrile (v:v) with 0.3% formic acid and 10 mM ammonium formate and (B) 0.3% formic acid in water with 10 mM ammonium formate. The integrated peak areas for the three (3) compounds were expressed in terms of monatin concentration (mg/L) based on a standard curve prepared for monatin. Thus, the extinction coefficient for monatin was applied to estimate concentrations of monatin lactone and monatin lactam since standards for these compounds were unavailable.

**Table 2. Total Indole Concentrations Under Various Conditions.**

| **Light Exposure** | YES | NO | YES | NO | YES | NO | YES | NO |
|---|---|---|---|---|---|---|---|---|
| **O₂ mg/L** | 8.3 | 8.3 | 8.3 | 8.3 | <0.5 | <0.5 mg | <0.5 | <0.5 |
| **EMIQ** | 0 ppm | 0 ppm | 200 ppm | 200 ppm | 0 ppm | 0 ppm | 200 ppm | 200 ppm |
| 0 Days | 36.3 mg/L | 36.3 mg/L | 34.7 mg/L | 35.5 mg/L | 36.3 mg/L | 34.7 mg/L | 34.7 mg/L | 34.7 mg/L |
| 7 Days | 15.3 mg/L | 36.5 mg/L | 32.7 mg/L | 35.3 mg/L | 35.9 mg/L | 32.8 mg/L | 35.8 mg/L | 32.8 mg/L |
| 14 Days | 4.5 mg/L | 37.0 mg/L | 28.4 mg/L | 43.3 mg/L | 36.0 mg/L | 34.4 mg/L | 33.9 mg/L | 34.4 mg/L |
| 21 Days | 0.0 mg/L | 41.0 mg/L | 26.0 mg/L | 36.2 mg/L | 38.8 mg/L | 32.8 mg/L | 35.1 mg/L | 32.8 mg/L |
| 28 Days | 0.0 mg/L | 37.5 mg/L | 22.5 mg/L | 33.5 mg/L | 34.6 mg/L | 35.2 mg/L | 29.3 mg/L | 35.2 mg/L |

### Example 3. Organoleptic Evaluations

Synthetic R,R-monatin containing approximately 95.4% R,R-monatin monopotassium salt (dry basis) was obtained from CSIR (Modderfontein, South Africa). About 35 mg/L of this monatin was placed in a buffered solution at a pH of about 2.8-3.0 comprising 9 mM citric acid-trisodium citrate in high purity water and preserved with about 150 mg/L sodium benzoate. To some samples 200 ppm SANMELIN™ AO-3000 enzymatically modified isoquercitrin (EMIQ) (San-Ei Gen F.F.I. - Osaka, Japan) was added. Dissolved O₂ levels were either increased by bubbling compressed air or reduced by bubbling N₂ (99.9% purity) through these samples until the target O₂ concentrations were achieved. Dissolved O₂ levels were determined at 20°C using a FOXY fluorescence quenching O₂ analyzer from Ocean Optics (Dunedin, FL). Samples were stored in clear, glass ampules (∼10 mL) after O₂ adjustment and heat-sealed to create an air-tight enclosure. The samples were then either stored in the dark, or exposed to light continuously (24 hours per day) in a light box (∼2200 lux light intensity) configured with a rotating carousel to provide even illumination. The source of light was provided by ultra-violet (UV) light wavelength transmitting bulbs and standard fluorescent bulbs. The heat produced by the lights warmed the samples to a temperature of about 28°C. Duplicate samples of each treatment were analyzed weekly for flavor and aroma by two food scientists trained to detect monatin sensory degradation. The intensity of each parameter was rated on a scale of 0 (bland) to 9 (extreme) and then the average response computed. The results are found in Tables 3A and 3B.

**Table 3A. Flavor Scoring.**

| **Time (d)** | **8**.**3 mg/L O₂** | | **8.3 mg/L O₂** | | **<0.5 mg/L O₂** | | **<0.5 mg/L O₂** | |
|---|---|---|---|---|---|---|---|---|
| | **0 ppm EMIQ** | | **200 ppm EMIQ** | | **0 ppm EMIQ** | | **200 ppm EMIQ** | |
| | **Light** | **Dark** | **Light** | **Dark** | **Light** | **Dark** | **Light** | **Dark** |
| 0 | 0.0 | 0.0 | 0.0 | 0.0 | 0.0 | 0.0 | 0.0 | 0.0 |
| 7 | 3.0 | 0.0 | 0.0 | 0.0 | 0.5 | 0.0 | 0.0 | 0.0 |
| 14 | 5.0 | 0.0 | 0.5 | 0.0 | 1.5 | 0.0 | 0.0 | 0.0 |
| 21 | 6.0 | 0.0 | 0.5 | 0.0 | 1.0 | 0.0 | 0.5 | 0.0 |
| 28 | 4.0 | 0.0 | 0.5 | 0.0 | 0.5 | 0.0 | 0.0 | 0.0 |

**Table 3B. Aroma Scoring**

| **Time (d)** | **8.3 mg/L O₂** | | **8.3 mg/L O₂** | | **<0.5 mg/L O₂** | | **<0.5 mg/L O₂** | |
|---|---|---|---|---|---|---|---|---|
| | **0 ppm EMIQ** | | **200 ppm EMIQ** | | **0 ppm EMIQ** | | **200 ppm EMIQ** | |
| | **Light** | **Dark** | **Light** | **Dark** | **Light** | **Dark** | **Light** | **Dark** |
| 0 | 0.0 | 0.0 | 0.0 | 0.0 | 0.0 | 0.0 | 0.0 | 0.0 |
| 7 | 2.0 | 0.0 | 0.0 | 0.0 | 1.5 | 0.0 | 0.5 | 0.0 |
| 14 | 5.0 | 0.0 | 0.5 | 0.0 | 1.0 | 0.0 | 0.0 | 0.0 |
| 21 | 5.0 | 0.0 | 0.5 | 0.0 | 2.0 | 0.0 | 0.5 | 0.0 |
| 28 | 4.0 | 0.0 | 0.5 | 0.0 | 0.5 | 0.0 | 0.5 | 0.0 |

### Example 4. Method of Determining the Presence of 3-Methyl Indole.

A compound described as having a musty flavor and odor during some of the organoleptic evaluations is described herein. It was only found in samples exposed to light and not detected in the initial samples (Day 0) nor in samples stored in the dark. The compound (3-methylindole; 3-MI; skatole) was identified using gas chromatography (GC), mass spectrometry, and olfactometry based on its retention time, mass spectra, and odor profile using the following method.

The volatile components from a sample were purged onto an absorbent and then thermally desorb them into the cold GC inlet for subsequent separation and identification by mass spectrometry. Simultaneously, the GC column effluent was split between the mass spec and olfactory port to determine the specific odor characteristics for compounds that contribute to the overall odor of the sample.

Each sample was extracted and analyzed in duplicate. A 25 g sample was weighed into an extraction flask, 5 µl of internal standard (ethyl benzene D10 @ 50 ppm) was added, and then 10.5 g of sodium chloride was added to the flask. A distillation adapter with a helium inlet and a thermal desorption tube (TDS) containing Tenax (ca. 200 mg) and two PDMS coated Twisters™ as the outlet was attached to the flask. The sample was extracted with agitation at 40° C for 30 minutes with a helium flow rate of 50 ml/minute. The TDS tube was removed and thermally desorbed at a temperature ramp of 35-200° C onto a cryofocused inlet at -50° C. The GC inlet was operated in the split mode (20:1 ratio) at 30 ml/min at 117 kPa. Column flow rate was 1.5 ml/min in the constant flow mode with an average velocity of 32 cm/second. The GC oven was programmed at 50° C for 0 minutes, ramped to 100° C at 20° C /min for 0 min then ramped to 150° C at 3° C/min and finally ramped to 250° C at 20° C/min for 3.00 minutes. The MSD quad was set to 150° C, the source to 230° C, and the transfer line to 280° C. Scan mode was used for masses between 20-350 and the threshold was set to 50. The scan rate was 4.33 scans per second. A 30-meter x 0.25 mm (0.25 micron film thickness) DB-5MS capillary column was used for the separation.

Each reconstructed total ion current chromatogram (RTICC) was manually reprocessed to 1) identify the compounds by using olfactory and mass spectral library matching. Compounds that were not detected by olfactory but which gave significant response were also identified, and 2) integrate the peaks to obtain areas for relative comparison to the other samples analyzed. An internal standard was used to help compensate for recovery and extraction efficiency. Corrected areas for each compound were then converted to graphical form to more easily compare samples analyzed during the test.

### Example 5. Sunlight and Monatin Stability

Synthetic R,R-monatin containing approximately 95.4% R,R-monatin monopotassium salt (dry basis) was obtained from CSIR (Modderfontein, South Africa). About 39 mg/L of this monatin was placed in a buffered solution at a pH of about 2.8-3.0 comprising 9 mM citric acid-trisodium citrate in high purity water and preserved with about 150 mg/L sodium benzoate. To some samples 200 ppm SANMELIN™ AO-3000 enzymatically modified isoquercitrin (EMIQ) (San-Ei Gen F.F.I. - Osaka, Japan) was added. Dissolved O₂ levels were either increased by bubbling compressed air or reduced by bubbling N₂ (99.9% purity) through these samples until the target O₂ concentrations were achieved. Dissolved O₂ levels were determined at 20°C using a FOXY fluorescence quenching O₂ analyzer from Ocean Optics (Dunedin, FL). Samples were stored in clear, glass ampules (~10 mL) after O₂ adjustment and heat-sealed to create an air-tight enclosure. The samples were then either stored in the dark, or exposed to sunlight. The exposure to sunlight is a much harsher environment for photosensitive compounds than the fluorescent light box because sunlight is many times brighter (~100,000 Lux vs. ∼2200 Lux) and produces higher-energy, UV radiation. In order to test samples under these alternate conditions, samples were stored outside and exposed to sunlight where temperatures varied from about 5 to about 30 degrees C and light intensity ranged from 0 at night to about 100,000 Lux on a clear day. Duplicate samples were analyzed weekly for total indole concentrations via the following method. The results can be found in Table 4.

Total indole (monatin and its intramolecular rearrangement products, monatin lactone and monatin lactam) concentrations were quantified by reversed phase HPLC at 40°C using an Agilent Zorbax Eclipse C₁₈ column with UV detection at 280 nm by PDA. The compounds were eluted by a gradient mobile phase consisting of (A) 1:1 methanol and acetonitrile (v:v) with 0.3% formic acid and 10 mM ammonium formate and (B) 0.3% formic acid in water with 10 mM ammonium formate. The integrated peak areas for the three (3) compounds were expressed in terms of monatin concentration (mg/L) based on a standard curve prepared for monatin. Thus, the extinction coefficient for monatin was applied to estimate concentrations of monatin lactone and monatin lactam since standards for these compounds were unavailable.

**Table 4. Total Indole Concentrations Following Sunlight Exposure.**

| | **8.3 mg/L O₂** | **8.3 mg/L O₂** | **<0.5 mg/L O₂** | **<0.5 mg/L O₂** |
|---|---|---|---|---|
| | **0 ppm EMIQ** | **0 ppm EMIQ** | **0 ppm EMIQ** | **200 ppm EMIQ** |
| **Time (d)** | **Dark** | **Light** | **Light** | **Light** |
| 0 | 38.5 | 38.5 | 38.5 | 38.5 |
| 7 | 39.4 | 0.0 | 39.7 | 36.0 |
| 14 | 38.0 | 0.0 | 34.4 | 38.4 |
| 21 | 36.9 | 0.0 | 32.0 | 32.8 |
| 28 | 39.1 | 0.0 | 30.6 | 36.7 |

It will be apparent to one of ordinary skill in the art from the teachings herein that specific embodiments and examples of the present invention may be directed to one or a combination of the above-indicated aspects, as well as other aspects. The present invention is as defined by the appended claims.

## Claims

1. A beverage composition comprising:
a liquid having a reduced dissolved O₂ content of less than 1.5 mg/L,
a high intensity sweetener composition comprising monatin, and
an edible antioxidant.

2. A beverage composition according to claim 1 wherein the high intensity sweetener composition comprises stereoisomerically-enriched R,R monatin.

3. A beverage composition according to any of claims 1 and 2 wherein the liquid has a dissolved O₂ content of less than 0.5 mg/L.

4. A beverage composition according to any of claims 1 and 2 wherein the liquid is substantially free of dissolved O₂.

5. A beverage composition according to any one of claims 1 to 4 wherein the edible antioxidant is a natural edible antioxidant.

6. A beverage composition according to claim 5, wherein the edible natural antioxidant is EMIQ.

7. A beverage composition according to claim 6, wherein the concentration of EMIQ is between 15 mg/L and 45 mg/L.

8. A beverage composition according to any one of claims 1 to 7 wherein the high intensity sweetener composition comprises at least 90% R,R monatin.

9. A beverage composition according to any one of claims 1 to 8 wherein the beverage composition presents no discernable musty off-flavor after 28 days stored at 28° C in the continuous presence of fluorescent lighting of 2200 lux.

10. A beverage composition according to any one of claims 1 to 9 wherein the beverage composition retains at least 60% of its monatin, as measured by total indole amount, after 28 days stored at 28° C in the continuous presence of fluorescent lighting of 2200 lux.

11. A shelf stable packaged beverage comprising:
a container having a wall, at least a portion of which transmits visible or UV light;
a beverage composition in the container, the beverage composition comprising water, monatin and an antioxidant,
and where such beverage composition has a dissolved O₂ content of less than 1.5 mg/L.

12. A shelf stable packaged beverage according to claim 11 wherein the container wall is to at least some extent O₂ permeable and wherein such container wall carries at least one composition selected from the group consisting of an O₂ trapping composition, an O₂ diffusion blocking composition., a visible light blocking composition, and a UV blocking composition.

13. A shelf stable packaged beverage according to claim 11 wherein the container closure is to at least some extent O₂ permeable and wherein such container closure carries at least one composition selected from the group consisting of an O₂ trapping composition, an O₂ diffusion blocking composition., a visible light blocking composition, and a UV blocking composition.

14. A shelf stable packaged beverage according to any of claims 11 to 13 wherein the beverage composition comprises a shelf stable beverage composition according to any one of claims 1 to 10.

15. A beverage composition according to claim 5, wherein the natural edible antioxidant is at least of one of the compositions selected from the group consisting of erythorbic acid, ubiquinone, glutathione, rosemary extract, grape seed extract, blueberry extract, pine bark extract, cranberry extract, olive juice, cocoa polyphenols, wine polyphenols, myricitrin, rutin, EMIQ, tocopherols, tocotrienols, carotenoids, β-carotene, lycopene, lutein, and natural ascorbic acid.

## Patentansprüche

1. Getränkezusammensetzung umfassend:
eine Flüssigkeit, die einen reduzierten Gehalt an gelöstem O₂ von weniger als 1,5 mg/l aufweist,
eine Süßungsmittelzusammensetzung hoher Intensität, die Monatin umfasst, und
ein essbares Antioxidationsmittel.

2. Getränkezusammensetzung nach Anspruch 1, wobei die Süßungsmittelzusammensetzung hoher Intensität stereoisomer angereichertes R,R-Monatin umfasst.

3. Getränkezusammensetzung nach einem der Ansprüche 1 und 2, wobei die Flüssigkeit einen Gehalt an gelöstem O₂ von weniger als 0,5 mg aufweist.

4. Getränkezusammensetzung nach einem der Ansprüche 1 und 2, wobei die Flüssigkeit im Wesentlichen frei von gelöstem O₂ ist.

5. Getränkezusammensetzung nach einem der Ansprüche 1 bis 4, wobei das essbare Antioxidationsmittel ein natürliches essbares Antioxidationsmittel ist.

6. Getränkezusammensetzung nach Anspruch 5, wobei das essbare natürliche Antioxidationsmittel EMIQ ist.

7. Getränkezusammensetzung nach Anspruch 6, wobei die Konzentration von EMIQ zwischen 15 mg/l und 45 mg/l liegt.

8. Getränkezusammensetzung nach einem der Ansprüche 1 bis 7, wobei die Süßungsmittelzusammensetzung hoher Intensität mindestens 90 % R,R-Monatin umfasst.

9. Getränkezusammensetzung nach einem der Ansprüche 1 bis 8, wobei die Getränkezusammensetzung keinen wahrnehmbaren fauligen schlechten Geschmack nach 28 Tage langer Lagerung bei 28 °C in kontinuierlicher Gegenwart von Neonlicht von 2200 Lux aufweist.

10. Getränkezusammensetzung nach einem der Ansprüche 1 bis 9, wobei die Getränkezusammensetzung mindestens 60 % ihres Monatins, wie durch die gesamte Indolmenge gemessen, nach 28 Tage langer Lagerung bei 28 °C in kontinuierlicher Gegenwart von Neonlicht von 2200 Lux aufweist.

11. Regalstabil verpacktes Getränk umfassend:
einen Behälter, der eine Wand aufweist, mindestens ein Teil von welcher sichtbares oder UV-Licht hindurchlässt;
eine Getränkezusammensetzung in dem Behälter, wobei die Getränkezusammensetzung Wasser, Monatin und ein Antioxidationsmittel umfasst,
und wobei eine derartige Getränkezusammensetzung einen Gehalt an gelöstem O₂ von weniger als 1,5 mg aufweist.

12. Regalstabil verpacktes Getränk nach Anspruch 11, wobei die Behälterwand zumindest teilweise O₂-durchlässig ist und wobei eine derartige Behälterwand mindestens eine Zusammensetzung trägt ausgewählt aus der Gruppe bestehend aus einer O₂ auffangenden Zusammensetzung, einer O₂-Diffusion blockierenden Zusammensetzung, einer sichtbares Licht blockierenden Zusammensetzung und einer UV blockierenden Zusammensetzung.

13. Regalstabil verpacktes Getränk nach Anspruch 11, wobei der Behälterverschluss zumindest teilweise O₂-durchlässig ist und wobei ein derartiger Behälterverschluss mindestens eine Zusammensetzung trägt ausgewählt aus der Gruppe bestehend aus einer O₂ auffangenden Zusammensetzung, einer O₂-Diffusion blockierenden Zusammensetzung, einer sichtbares Licht blockierenden Zusammensetzung und einer UV blockierenden Zusammensetzung.

14. Regalstabil verpacktes Getränk nach einem der Ansprüche 11 bis 13, wobei die Getränkezusammensetzung eine regalstabile Getränkezusammensetzung nach einem der Ansprüche 1 bis 10 umfasst.

15. Getränkezusammensetzung nach Anspruch 5, wobei das natürliche essbare Antioxidationsmittel mindestens eine der Zusammensetzungen ist ausgewählt aus der Gruppe bestehend aus Erythorbinsäure, Ubichinon, Glutathion, Rosmarinextrakt, Traubenkernextrakt, Heidelbeerextrakt, Kiefernrindenextrakt, Preiselbeerextrakt, Olivensaft, Kakaopolyphenolen, Weinpolyphenolen, Myricitrin, Rutin, EWIQ, Tocopherolen, Tocotrienolen, Carotenoiden, 0-Carotin, Lycopen, Lutein und natürlicher Ascorbinsäure.

## Revendications

1. Composition de boisson comprenant :
un liquide présentant une teneur réduite en O₂ dissous de moins de 1,5 mg/l,
une composition d'édulcorant à haute intensité comprenant de la monatine, et
un antioxydant comestible.

2. Composition de boisson selon la revendication 1, dans laquelle la composition d'édulcorant à haute intensité comprend de la monatine enrichie en stéréoisomère R,R.

3. Composition de boisson selon l'une quelconque des revendications 1 et 2, dans laquelle le liquide présente une teneur en O₂ dissous de moins de 0,5 mg/l.

4. Composition de boisson selon l'une quelconque des revendications 1 et 2, dans laquelle le liquide est essentiellement exempt de O₂ dissous.

5. Composition de boisson selon l'une quelconque des revendications 1 à 4, dans laquelle l'antioxydant comestible est un antioxydant naturel comestible.

6. Composition de boisson selon la revendication 5, dans laquelle l'antioxydant naturel comestible est l'EMIQ.

7. Composition de boisson selon la revendication 6, dans laquelle la concentration en EMIQ est située entre 15 mg/l et 45 mg/l.

8. Composition de boisson selon l'une quelconque des revendications 1 à 7, dans laquelle la composition d'édulcorant à haute intensité comprend au moins 90 % de monatine R,R.

9. Composition de boisson selon l'une quelconque des revendications 1 à 8, dans laquelle la composition de boisson ne présente aucun goût de moisi discernable après 28 jours de stockage à 28 °C avec la présence continue d'un éclairage fluorescent de 2200 lux.

10. Composition de boisson selon l'une quelconque des revendications 1 à 9, dans laquelle la composition de boisson conserve au moins 60 % de sa monatine, tel que mesuré par la quantité totale d'indole, après 28 jours de stockage à 28 °C avec la présence continue d'un éclairage fluorescent de 2200 lux.

11. Boisson conditionnée à longue durée de conservation, comprenant :
un récipient ayant une paroi, dont au moins une partie transmet la lumière visible ou UV ;
une composition de boisson dans le récipient, la composition de boisson comprenant de l'eau, de la monatine et un antioxydant,
et dans lequel cette composition de boisson présente une teneur en O₂ dissous de moins de 1,5 mg/l.

12. Boisson conditionnée à longue durée de conservation selon la revendication 11, dans laquelle la paroi du récipient est jusqu'à un certain point perméable à O₂ et dans laquelle cette paroi du récipient porte au moins une composition choisie dans le groupe constitué par une composition de piégeage de O₂, une composition de blocage de la diffusion de O₂, une composition de blocage de la lumière visible et une composition de blocage des UV.

13. Boisson conditionnée à longue durée de conservation selon la revendication 11, dans laquelle la fermeture du récipient est jusqu'à un certain point perméable à O₂ et dans laquelle cette fermeture du récipient porte au moins une composition choisie dans le groupe constitué par une composition de piégeage de O₂, une composition de blocage de la diffusion de O₂, une composition de blocage de la lumière visible et une composition de blocage des UV.

14. Boisson conditionnée à longue durée de conservation selon l'une quelconque des revendications 11 à 13, dans laquelle la composition de boisson comprend une composition de boisson à longue durée de conservation selon l'une quelconque des revendications 1 à 10.

15. Composition de boisson selon la revendication 5, dans laquelle l'antioxydant naturel comestible est au moins un antioxydant naturel comestible des compositions choisies dans le groupe constitué par l'acide érythorbique, l'ubiquinone, la glutathione, un extrait de romarin, un extrait de pépins de raisin, un extrait de myrtille, un extrait d'écorce de pin, un extrait de canneberge, un jus d'olive, les polyphénols de cacao, les polyphénols de vin, la myricitrine, la rutine, l'EMIQ, les tocophérols, les tocotriènols, les caroténoïdes, le β-carotène, le lycopène, la lutéine et l'acide ascorbique naturel.
